# EUROPEAN PATENT APPLICATION

(11) **EP 4 726 875 A1**
(43) Date of publication of application: **15.04.2026**
(21) Application number: 24913484.2
(22) Date of filing: 29.11.2024
(51) Int. Cl.: H01M 50/174, H01M 50/152, H01M 50/107, H01M 50/169, H01M 50/249, H01M 4/70, B60L 50/64

(54) **CURRENT COLLECTOR, BATTERY CELL, BATTERY MODULE, BATTERY PACK AND VEHICLE COMPRISING SAME**

(30) Priority: 26.12.2023 KR 20230191777; 22.02.2024 KR 20240025957; 23.05.2024 KR 20240067268
(71) Applicant: LG Energy Solution, Ltd., Seoul 07335 (KR)
(72) Inventor: OH, Dong-Hyun, Daejeon 34122 (KR); PARK, Kyeong-Hoon, Daejeon 34122 (KR); LEE, Je-Jun, Daejeon 34122 (KR); JUNG, Ji-Min, Daejeon 34122 (KR)
(74) Representative: Goddar, Heinz J.
(86) International application number: PCT/KR2024/019350
(87) International publication number: WO 2025/143591

(57) **Abstract**

A battery cell according to an embodiment of the present disclosure may include an electrode assembly configured by winding a first electrode and a second electrode with a separator interposed therebetween around a winding axis to define a core and an outer surface, the first electrode including an active material portion coated with an active material layer along a winding direction and a first uncoated portion not coated with an active material layer, and at least a portion of the first uncoated portion being used as an electrode tab itself, a battery housing configured to receive the electrode assembly through an opening formed on one side, and a current collector including a tab-coupling portion coupled to the first uncoated portion and a housing-coupling portion extending from the tab-coupling portion and electrically coupled to an inner surface of the battery housing, wherein at least one notch may be provided in the housing-coupling portion.

## Description

### TECHNICAL FIELD

The present disclosure relates to a current collector, a battery cell, a battery module, a battery pack, and a vehicle including the same. This application is based on and claims priority from Korean Patent Application No. 10-2023-0191777, filed on December 26, 2023, Korean Patent Application No. 10-2024-0025957, filed on February 22, 2024, and Korean Patent Application No. 10-2024-0067268, filed on May 23, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, the current collector included in the conventional battery cell is designed to have a four-way blade and is welded to a CBD flat portion. Accordingly, among the main welding management items, a welding debris spatter is likely to be introduced in the worst case when welding. Specifically, when welding is performed on the lifted part between the upper bending position of the beading neck and the current collector due to the tolerance of the thickness of the raw-material wall of the can, the tolerance of the flat portion of the upper beading neck, and the welding adjustment tolerance, the debris may inflow.

### DISCLOSURE

### Technical Problem

The present disclosure is designed to solve the problems of the related art, and therefore the present disclosure aims to perform welding on a local area by forming a notch on a contact portion of the current collector included inside the battery cell, thereby reducing the size of the laser radiation unit.

In addition, the present disclosure aims to reduce the power of a laser beam while improving welding performance.

Furthermore, the present disclosure aims to reduce the inflow of debris during the process.

In addition, the present disclosure aims to reduce the welding back bead.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell that includes: an electrode assembly configured by winding a first electrode and a second electrode with a separator interposed therebetween around a winding axis to define a core and an outer surface, the first electrode including an active material portion coated with an active material layer in a winding direction and a first uncoated portion not coated with an active material layer, and at least a portion of the first uncoated portion being used as an electrode tab itself; a battery housing configured to receive the electrode assembly through an opening formed on one side; and a current collector including a tab-coupling portion coupled to the first uncoated portion and a housing-coupling portion extending from the tab-coupling portion and electrically coupled to an inner surface of the battery housing, wherein at least one notch is provided in the housing-coupling portion.

The battery housing may have a beading portion formed to be recessed inward at an end adjacent to the opening.

According to an embodiment of the present disclosure, the housing-coupling portion may include: a contact portion coupled onto the beading portion of the battery housing; and a coupling portion connecting the tab-coupling portion and the contact portion.

Here, the notch may be provided on the contact portion.

According to an embodiment of the present disclosure, the notch is configured to be irradiated with a laser beam.

A width of the notch may be configured to be 10 to 90% of a width of the laser beam.

According to another embodiment of the present disclosure, the notch may extend in a direction perpendicular to a radial direction of the battery cell.

According to another embodiment of the present disclosure, a plurality of notches may be provided in one contact portion.

For example, the notches may be disposed to be spaced a predetermined distance apart from each other in a radial direction of the battery cell.

According to another embodiment of the present disclosure, a plurality of notches may be configured to be included within a width of the laser beam.

According to an embodiment of the present disclosure, the notch may be positioned on a flat upper surface of the beading portion.

According to another embodiment of the present disclosure, the contact portion may have a welding bead formed by radiation of a laser beam.

The notch may be formed by notching a predetermined portion of the housing-coupling portion to partially reduce the thickness of the housing-coupling portion.

The notch may be positioned on a flat upper surface of the beading portion, and a center of the welding bead may be positioned inward from a center of the flat upper surface of the beading portion.

According to another embodiment of the present disclosure, the width of the welding bead may be configured to be 10 to 35% of the recessed depth of the beading portion.

Meanwhile, the present disclosure provides a battery pack including at least one battery cell according to the present disclosure.

In addition, the present disclosure provides a vehicle including at least one battery pack according to the present disclosure.

### Advantageous Effects

According to the present disclosure, a notch provided in the contact portion of the current collector included in the cylindrical battery cell enables smooth welding even in a local area.

In addition, according to the present disclosure, it is possible to reduce the size of a laser beam.

In addition, according to the present disclosure, it is possible to improve the welding performance while reducing the power of a laser beam.

Furthermore, according to the present disclosure, it is possible to reduce the inflow of a debris spatter during the process.

In addition, according to the present disclosure, the welding back bead is able to be reduced.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a battery cell according to an embodiment of the present disclosure.
FIG. 2 is a cross-sectional perspective view of the battery cell in FIG. 1.
FIG. 3 is a cross-sectional view of the battery cell in FIG. 1.
FIG. 4 is a plan view illustrating a current collector according to an embodiment of the present disclosure.
FIG. 5 is a drawing illustrating a state in which the current collector in FIG. 4 is seated on the beading portion.
FIG. 6 is an enlarged view of a contact portion of the current collector in FIG. 4.
FIG. 7 is an enlarged view of a notch and a welding bead of the contact portion in FIG. 6.
FIG. 8 is a drawing illustrating the relationship between the notch provided in the current collector in FIG. 4 and a laser beam.
FIG. 9 is a cross-sectional view illustrating a state in which the current collector in FIG. 4 is seated on the beading portion.
FIG. 10 is a drawing illustrating a comparative example of the present disclosure.
FIG. 11 is a drawing illustrating a position at which a welding bead provided in a current collector is formed according to an embodiment of the present disclosure.
FIG. 12 is a drawing illustrating a battery pack including a battery cell according to an embodiment of the present disclosure.
FIG. 13 is a drawing illustrating a vehicle including the battery pack in FIG. 12.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The sizes of some elements shown in the attached drawings may be exaggerated, instead of reflecting their actual sizes, for convenience of explanation and clarification. In addition, the same reference numerals may indicate the same elements among the embodiments.

Stating that two objects to be compared are the same means that they are "substantially the same." Therefore, "substantially the same" may include the case having a deviation that is considered low in the art, for example, a deviation of less than 5%. In addition, a parameter that is uniform in a certain area may indicate that it is uniform from the average perspective.

Although "first," "second," etc. are used to describe various elements, these elements are not limited to these terms. These terms are only used to distinguish one element from another element, and unless otherwise stated, a first element may also be a second element.

Throughout the specification, unless otherwise stated, respective elements may include a single element or a plurality of elements.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'fastened' to another element" should be understood that the elements may be directly connected or coupled to each other, and that another element may be "interposed" between the elements, or that the elements may be "connected," "coupled," or "fastened" through another element.

Throughout the specification, "A and/or B", unless otherwise stated, may denote A or B, or A and B, and "C to D", unless otherwise stated, may denote "equal to or greater than C and equal to or less than D."

For convenience of explanation, in this specification, the longitudinal direction of a winding axis of an electrode assembly wound in a jelly-roll shape will be referred to as an axial direction. In addition, the direction surrounding the winding axis will be referred to as a circumferential direction. In addition, the direction approaching or moving away from the winding axis will be referred to as a radial direction. Among these, the direction approaching the winding axis is called a centripetal direction, and the direction moving away from the winding axis is called a centrifugal direction.

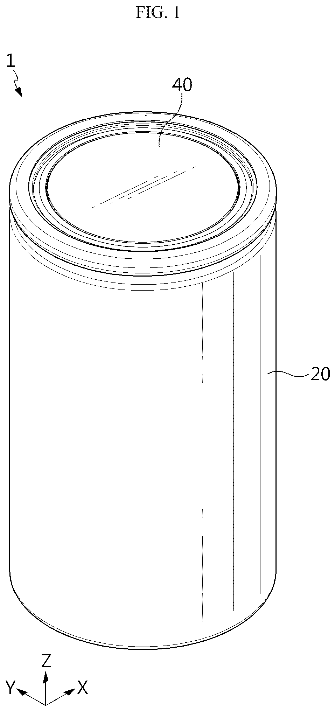

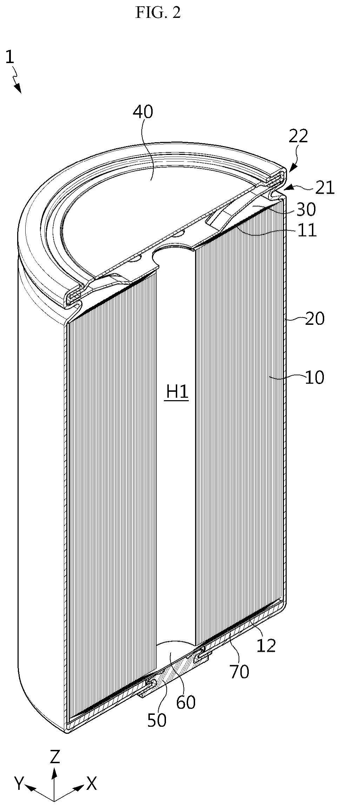

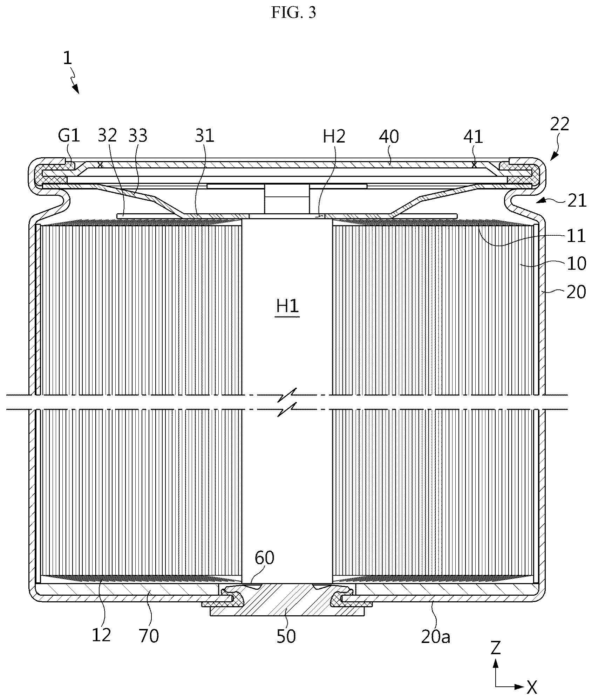

FIG. 1 is a drawing illustrating a battery cell according to an embodiment of the present disclosure, and FIG. 2 is a cross-sectional perspective view of the battery cell in FIG. 1. FIG. 3 is a cross-sectional view of the battery cell in FIG. 1.

Referring to FIGS. 1 to 3, a battery cell 1 according to an embodiment of the present disclosure includes an electrode assembly 10, a battery housing 20, and a current collector 30. In addition thereto, the battery cell 1 may further include a housing cover 40, a terminal 50, a sealing gasket G1, a second current collector 60, and/or an insulator 70. The present disclosure is not limited to a specific type of battery, and is applicable to other types of batteries, such as a prismatic battery.

The electrode assembly 10 includes a first uncoated portion 11 and a second uncoated portion 12. More specifically, the electrode assembly 10 is configured by winding a first electrode and a second electrode with a separator interposed therebetween around a winding axis (parallel to the Z-axis direction), thereby defining a core and an outer surface. That is, the electrode assembly 10 applied to the present disclosure may be a jellyroll-type electrode assembly 10. In this case, an additional separator may be provided on the outer surface of the electrode assembly 10 for insulation from the battery housing 20. The electrode assembly 10 may have a winding structure well known in the art without limitation.

The electrode assembly 10 has the first uncoated portion 11 and the second uncoated portion 12 disposed in opposite directions. In addition, the first uncoated portion 11 and the second uncoated portion 12 are exposed to the outside of the separator. In this electrode assembly 10, only a part of the first uncoated portion 11 and the second uncoated portion 12 may be defined as an electrode tab and used.

The first electrode includes a first electrode current collector and a first electrode active material applied on one or both sides of the first electrode current collector. The first electrode has an uncoated portion to which the first electrode active material is not coated at one end in the widthwise direction (parallel to the height direction of the battery cell 1 illustrated in FIG. 1) (the Z-axis direction). That is, the first electrode includes an uncoated portion, exposed to the outside of the separator, in which the active material is not coated at the long side end in the winding direction. The uncoated portion that functions as a first electrode tab will be referred to as a first uncoated portion 11 hereinafter. The first uncoated portion 11 is provided at the top of the electrode assembly 10 accommodated in the battery housing 20 along the height direction (parallel to the height direction of the battery cell 1 illustrated in FIG. 1). That is, the first electrode includes a first uncoated portion 11 on which the active material layer is not coated at the long side end so as to be exposed to the outside of the separator, and at least a portion of the first uncoated portion 11 is used as an electrode tab itself. The first uncoated portion 11 may be, for example, a negative electrode tab. In this case, the first electrode is a negative electrode plate.

Meanwhile, at least a portion of the first uncoated portion 11 may include a plurality of segments divided along the winding direction of the electrode assembly 10. In this case, the plurality of segments may be bent in the radial direction (perpendicular to the Z-axis direction) (e.g., the X-axis direction) of the electrode assembly 10.

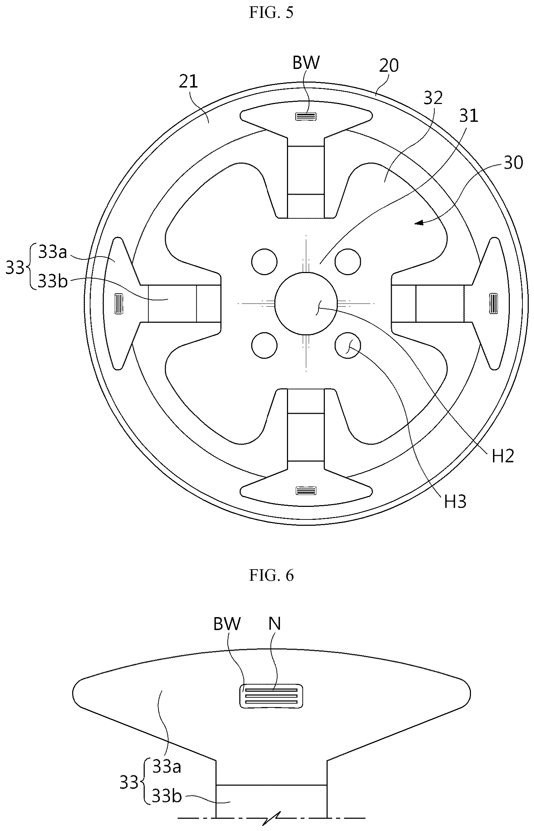

Referring to FIGS. 2 and 3, the plurality of bent segments of the first uncoated portion 11 may overlap each other in multiple layers to form a bending surface. In this case, a tab-coupling portion 32 of the current collector 30, which will be described later, may be coupled onto the bending surface. The tab-coupling portion 32 may be coupled to an area where the plurality of segments overlap each other in multiple layers. In this case, welding may be performed on a certain area while the tab-coupling portion 32 is seated on the bending surface of the first uncoated portion 11. That is, the tab-coupling portion 32 may be coupled to an area where the plurality of segments of the first uncoated portion 11 overlap in multiple layers. For example, as shown in FIG. 5, the tab-coupling portion 32 may have at least one welding portion in a certain area while seated on the bending surface of the first uncoated portion 11.

The second electrode includes a second electrode current collector and a second electrode active material applied on one or both surfaces of the second electrode current collector. The second electrode has an uncoated portion to which the second electrode active material is not coated at the other end in the widthwise direction (parallel to the height direction of the battery cell 1 illustrated in FIG. 1). That is, the second electrode includes an uncoated portion, exposed to the outside of the separator, in which the active material is not coated at the long side end in the winding direction. The uncoated portion that functions as a second electrode tab will be referred to as a second uncoated portion 12 hereinafter. The second uncoated portion 12 is provided at the bottom of the electrode assembly 10 accommodated in the battery housing 20 along the height direction. That is, the second electrode includes a second uncoated portion 12 on which the active material layer is not coated at the long side end so as to be exposed to the outside of the separator, and at least a portion of the second uncoated portion 12 is used as an electrode tab itself. The second uncoated portion 12 may be, for example, a negative electrode tab. In this case, the second electrode is a positive electrode plate.

Meanwhile, in the present disclosure, any active material known in the art may be used as the positive electrode active material coated on the positive electrode plate and the negative electrode active material coated on the negative electrode plate. Preferably, the battery cell 1 may be, for example, a cylindrical secondary battery having a form factor ratio (ratio of diameter to height) of more than about 0.4. Preferably, the diameter of the cylindrical secondary battery may be 40 mm to 50 mm, and the height may be 60 mm to 130 mm. The form factor of the battery cell 1 may be, for example, 46110, 4875, 48110, 4880, or 4680.

Referring to FIGS. 1 to 3, the battery housing 20 is a roughly cylindrical container having an opening formed on one side and is made of a conductive metal material. In one example, the battery housing 20 may be made of steel, nickel-plated steel, or stainless steel (SUS), and may be a battery can, but the present disclosure is not limited thereto. The side surface of the battery housing 20 and the lower surface located opposite the opening are generally formed as one piece. That is, the battery housing 20 generally has an upper opening and a closed portion at the bottom in the height direction (Z-axis direction). The lower surface of the battery housing 20 may have a substantially flat shape. The battery housing 20 receives an electrode assembly 10 through an opening formed on one side in the height direction. The battery housing 20 may also receive an electrolyte through the opening.

The battery housing 20 may have a beading portion 21 formed at an end adjacent to the opening provided at the top of the battery housing 20. The battery housing 20 may further include a crimping portion 22 formed on the beading portion 21. The beading portion 21 is configured by the outer circumference of the battery housing 20 being recessed to a predetermined depth. More specifically, the beading portion 21 may be configured to be recessed toward the inside in the area between the opening formed on one side of the battery housing 20 and the accommodation portion for receiving the electrode assembly 10.

The beading portion 21 is formed above the electrode assembly 10. The inner diameter of the battery housing 20 in the area where the beading portion 21 is formed is configured to be smaller than the diameter of the electrode assembly 10. At least one tab-coupling portion 32 of the current collector 30, which will be described later, may be positioned lower than the beading portion 21.

The beading portion 21 provides a support surface on which the housing cover 40 is able to be seated. In addition, the beading portion 21 may provide a support surface on which at least a portion of the edge of the current collector 30, which will be described later, may be seated and coupled. That is, at least a portion of the edge of the current collector 30 of the present disclosure and/or the edge of the housing cover 40 may be seated on the upper surface of the beading portion 21. In order to stably support at least a portion of the edge of the current collector 30 and/or the edge of the housing cover 40, the upper surface of the beading portion 21 may extend along a direction approximately parallel to the lower surface of the battery housing 20, that is, along a direction approximately perpendicular to the side wall of the battery housing 20.

The beading portion 21 may prevent the electrode assembly 10, which may have a size approximately corresponding to the inner diameter of the battery housing 20, from coming out through the opening formed at the top of the battery housing 20, and may function as a support on which the housing cover 40 is seated. The upper beading portion 21 may function as a support for fixing the contact portion 33a of the current collector 30 and the sealing gasket G1, as well as the housing cover 40.

The crimping portion 22 is formed on the beading portion 21. The crimping portion 22 extends and bends to wrap around the edge of the housing cover 40 disposed on the beading portion 21. This shape of the crimping portion 22 fixes the housing cover 40 onto the beading portion 21.

Next, referring to FIGS. 1 to 11, the current collector 30 according to the embodiment of the present disclosure will be described in detail in comparison with the conventional current collector.

Referring to FIGS. 1 to 3, the current collector 30 according to an embodiment of the present disclosure is accommodated inside the battery housing 20, is electrically connected to the electrode assembly 10, and is also electrically connected to the battery housing 20. That is, the current collector 30 electrically connects the electrode assembly 10 and the battery housing 20.

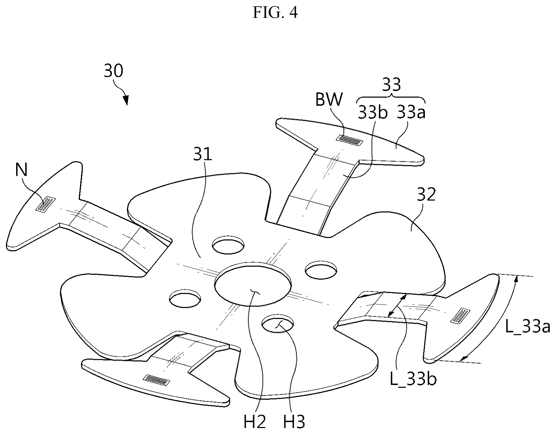

FIG. 4 is a drawing illustrating a current collector according to an embodiment of the present disclosure, and FIG. 5 is a drawing illustrating a state in which the current collector in FIG. 4 is seated on the beading portion.

Referring to FIG. 4 and FIG. 5, the current collector 30 includes a support portion 31 positioned on one surface of the electrode assembly 10, a tab-coupling portion 32 extending from the support portion 31 and coupled to a first uncoated portion 11, and a housing-coupling portion 33 extending from the support portion 31 and coupled to an inner surface of the battery housing 20.

The tab-coupling portion 32 and the housing-coupling portion 33 are indirectly connected through the support portion 31, instead of being directly connected to each other. Therefore, when an external impact is applied to the battery cell 1 of the present disclosure, damage to the coupling portion between the current collector 30 and the electrode assembly 10 and the coupling portion between the current collector 30 and the battery housing 20 may be minimized.

Referring back to FIG. 4, the housing-coupling portion 33 has at least one notch N. A laser beam may be radiated onto the notch N. Accordingly, the inner surface of the housing-coupling portion 33 and the battery housing 20 may be welded.

As described above, according to the present disclosure, at least one notch N provided in the housing-coupling portion 33 of the current collector 30 may facilitate local welding of the housing-coupling portion 33. That is, if the notch N is provided in the present disclosure, the laser beam may be radiated onto the notch N, thereby significantly reducing the probability of welding defects. In addition, according to the above configuration, since the welding performance is increased, there is no need to set the power of the laser beam unnecessarily high. That is, according to the present disclosure, welding performance may be expected while reducing the size of the laser beam radiation unit and the power of the laser beam.

For example, if the power of the welding laser is excessively high, an impurity called a back bead is generated at the rear surface of the weld. However, according to the configuration of the present disclosure, since the power of the laser beam is reduced, the occurrence of the back bead may be prevented.

Referring to FIG. 4, one or more tab-coupling portions 32 and/or one or more housing-coupling portions 33 may be provided. One or more tab-coupling portions 32 and one or more housing-coupling portions 33 may be arranged around the center of the current collector 30, for example, substantially in a radial form, a cross form, or a combination thereof. In another aspect, each of the plurality of housing-coupling portions 33 may be disposed between adjacent tab-coupling portions 32.

Referring to FIG. 3, the support portion 31 and the plurality of tab-coupling portions 32 are disposed on the top of the electrode assembly 10. The tab-coupling portion 32 is coupled to the first uncoated portion 11 of the electrode assembly 10. The tab-coupling portion 32 may be coupled to the first uncoated portion 11 by welding, for example, in the radial direction of the electrode assembly 10. The tab-coupling portion 32 may be welded to the first uncoated portion 11 in the state approximately parallel to the lower surface of the battery housing 20. Meanwhile, the support portion 31, as well as the tab-coupling portion 32, may be coupled to the first uncoated portion 11.

The current collector 30 may be made of the same type of metal as the first electrode current collector, or a material that is well welded thereto. For example, it may be copper or a copper alloy, nickel or a nickel alloy, steel, SUS, or a composite material thereof.

The support portion 31 may have a current collector hole H2 formed at a position corresponding to a winding hole H1 formed at approximately the center of the electrode assembly 10. The winding hole H1 and the current collector hole H2, which communicate with each other, may function as a passage for inserting a welding rod or radiating a laser beam for welding between a terminal 50 and a second current collector 60, which will be described later, or welding between the terminal 50 and a lead tab (not shown). The current collector hole H2 may have a diameter substantially the same as or larger than the winding hole H1 of the electrode assembly 10 so as not to cover the winding hole H1 formed in the core of the electrode assembly 10. If the diameter of the current collector hole H2 is excessively smaller than the diameter of the winding hole H1, the hole formed in the winding hole H1 may be covered, which may reduce the injection performance, and it may also be difficult to secure sufficient space for insertion of a welding device or for laser radiation.

The plurality of tab-coupling portions 32 may be configured to extend approximately radially from the support portion 31 of the current collector 30 toward the side wall of the battery housing 20. The plurality of tab-coupling portions 32 may be positioned to be spaced apart from each other along the perimeter of the support portion 31.

The plurality of housing-coupling portions 33 may be configured to extend approximately radially from the support portion 31 of the current collector 30 toward the side wall of the battery housing 20. The plurality of housing-coupling portions 33 may be positioned to be spaced apart from each other along the perimeter of the support portion 31. At least one housing-coupling portion 33 may be positioned between adjacent tab-coupling portions 32.

Referring to FIG. 5, the housing-coupling portion 33 may extend from the support portion 31 and be electrically coupled to the inner surface of the battery housing 20. For example, the housing-coupling portion 33 may be coupled to, for example, the beading portion 21 of the inner surface of the battery housing 20. In particular, the housing-coupling portion 33 may be coupled to the upper surface of the beading portion 21.

In the battery cell 1 of the present disclosure, the housing-coupling portion 33 may be secured on the beading portion 21 through a process of storing the electrode assembly 10 having the current collector 30 coupled thereto inside the battery housing 20. Therefore, the welding process of the battery housing 20 and the current collector 30 may be easily performed. For example, as shown in FIG. 5, at least one welding bead BW may be provided between the beading portion 21 and the housing-coupling portion 33. That is, the current collector 30 may include at least one welding bead BW that is welded onto the inner surface of the battery housing 20. The battery housing 20 and the current collector 30 may be welded by, for example, laser welding, ultrasonic welding, or spot welding. In addition, the upper surface of the beading portion 21 may be configured to extend in a direction approximately parallel to the lower surface of the battery housing 20, that is, in a direction approximately perpendicular to the side wall of the battery housing 20, and the housing-coupling portion 33 may also be configured to extend in the same direction, that is, in the radial direction and the circumferential direction, so that the housing-coupling portion 33 may be in stable contact with the beading portion 21. In addition, since the housing-coupling portion 33 comes into stable contact with the beading portion 21 as described above, the two components may be smoothly welded, thereby improving the bonding strength between the two components and minimizing the increase in resistance at the bonding portion.

Referring to FIG. 4 and FIG. 5, the housing-coupling portion 33 may include a contact portion 33a coupled to the inner surface of the battery housing 20, and a coupling portion 33b connecting the support portion 31 and the contact portion 33a. In one aspect of the present disclosure, the first tab-coupling portion 32 may have a larger width than the coupling portion 33b. In another aspect of the present disclosure, the contact portion 33a may have a larger width than the coupling portion 33b. Here, "width" indicates a dimension along a direction perpendicular to the radial direction.

The contact portion 33a is coupled onto the inner surface of the battery housing 20. Preferably, the contact portion 33a may be coupled onto the beading portion 21 of the battery housing 20. In this case, for stable contact and coupling, both the beading portion 21 and the contact portion 33a may be configured to extend in a direction approximately parallel to the lower surface of the battery housing 20, that is, in a direction approximately perpendicular to the side wall of the battery housing 20.

At least a portion of the contact portion 33a may have an arc shape that extends in the circumferential direction along the beading portion 21 of the battery housing 20. Therefore, the circumferential extension length L_33a of the contact portion 33a may be formed to be greater than the width L_33b of the coupling portion 33b. In this case, in order to maximize the contact area, the current collector 30 may be configured such that the sum of the circumferential extension lengths of the contact portions 33a of the plurality of housing-coupling portions 33 is substantially the same as or slightly less than the inner circumference of the battery housing 20. In another aspect, the contact portion 33a may be configured in the form of arcs that extend in opposite directions along the circumferential direction from the intersection of the coupling portion 33b and the contact portion 33a on the beading portion 21.

Referring to FIG. 4, the current collector 30 of the present disclosure may have at least one injection hole H3. The injection hole H3 may be provided, for example, in the tab-coupling portion 32. In the case where a plurality of tab-coupling portion 32 are provided, the injection hole H3 may be provided in at least one tab-coupling portion 32. Referring to FIG. 3 and FIG. 4, in manufacturing the battery cell 1 according to an embodiment of the present disclosure, an assembly including the electrode assembly 10 and the current collector 30 may be stored inside the battery housing 20 and then an electrolyte may be injected. In this case, the injection property may be improved due to the injection hole H3. One tab-coupling portion 32 may have a plurality of injection holes H3. The plurality of injection holes H3 may be arranged approximately symmetrically in left-right direction with respect to the widthwise center of the tab-coupling portion 32.

It is preferable that the battery housing 20 and the current collector 30 are welded by laser welding. By applying laser welding, it is advantageous in ensuring quality and performance by preventing deformation due to contact pressure welding such as resistance welding, and in increasing product yield. In addition, since there is no need to replace the welding rod or horn, it is advantageous in improving production efficiency, reducing production costs, and reducing manufacturing process time. Laser welding has a higher bonding strength than ultrasonic welding, and may also secure uniformity in welding performance and quality compared to resistance welding. The laser beam directly reaches downward the surface of the contact portion 33a to be welded from the top of the battery housing 20. The laser welding device may be configured to include a laser source (laser beam source), a laser radiation unit including optical components such as a collimator, lens, and mirror for focusing the laser from the laser source to generate a laser beam with a predetermined spot diameter and radiate the laser beam onto the workpiece to be welded, and a system for injecting welding atmosphere gas and discharging by-products. The spot diameter indicates the diameter at the exact focus position. Although welding is able to be performed in air, it may be desirable to partially inject an inert gas such as nitrogen gas (N₂) or argon gas (Ar), so that a welding atmosphere gas injection system including an inert gas supply unit may be included. In addition, a by-product discharge system including a dust collector for sucking and removing welding fume may be included.

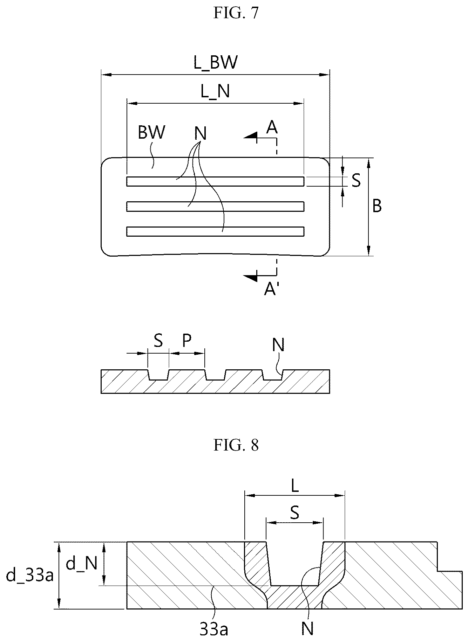

FIG. 6 is an enlarged view of a contact portion of the current collector in FIG. 4, and FIG. 7 is an enlarged view of a notch and a welding bead of the contact portion in FIG. 6. In FIG. 7, the lower diagram shows the cross-section taken along line A-A' in the upper diagram. FIG. 8 is a drawing illustrating the relationship between the notch provided in the current collector in FIG. 4 and a laser beam.

Referring to FIGS. 4 to 6, the notch N may be provided on the contact portion 33a. A laser beam may be radiated onto the notch N. Accordingly, the contact portion 33a and the inner surface of the battery housing 20 may be welded to each other. More preferably, the contact portion 33a and the beading portion 21 may be welded. That is, a welding bead BW may be formed between the contact portion 33a and the beading portion 21 by radiation of the laser beam.

The welding bead usually indicates the deposited metal generated by one welding (one laser beam pass) and may also be called a welding spot. The size, shape, position, and degree of overlap of the welding bead may vary depending on the welding conditions. In this specification, the welding bead BW is used to indicate a welded portion including welding beads that are formed separately one by one and thus are distinct from each other, as well as welding beads that overlap at least in part to form a single mass. The welding bead BW may be formed by wobble welding, spot welding, weaving (hatching) welding, or scan welding.

According to this structure, at least one notch N provided in the contact portion 33a of the current collector 30 may facilitate welding performed even in a local area of the contact portion 33a. That is, if the notch N is provided in the present disclosure, the laser beam may be radiated onto the notch N, thereby significantly reducing the probability of welding defects. In addition, according to the above configuration, since the welding performance is increased, there is no need to set the power of the laser beam unnecessarily high. That is, according to the present disclosure, welding performance may be expected while reducing the size of the laser beam radiation unit and the power of the laser beam.

Referring to FIGS. 7 and 8, the notch N may indicate a portion of the current collector 30, in particular, the housing-coupling portion 33, more specifically, a portion formed by notching the contact portion 33a to partially reduce the thickness of the contact portion 33a. However, the notch N herein is not limited to the notch formed by notching according to a dictionary meaning, and may also indicate a space formed by cutting or pressing the current collector 30 by other methods, and may also include a groove formed inherently in the current collector 30 according to the mold shape when the current collector 30 is manufactured by casting. In addition, the notch N may encompass a groove recessed inward from the upper surface of the contact portion 33a of the current collector 30 or trench-shaped recessed portion. The depth d_N of the notch N is less than the thickness d_33a of the contact portion 33a. Preferably, the depth d_N of the notch N may be less than or equal to 50% of the thickness d_33a of the contact portion 33a. The cross-sectional shape of the notch N may be a V-shaped triangle according to the dictionary meaning of the notch, but may also include shapes such as a trapezoid, a square, a semi-ellipse, a semicircle, or the like. In addition, the lower end corners of the notch N may have a round shape to prevent stress from being concentrated on the corners during notching, thereby preventing cracks from occurring.

The length L_BW of the welding bead BW is a dimension in a direction approximately perpendicular to the radial direction of the battery cell 1, and may be formed in the radiation direction of the laser beam to have approximately 1 to 3 mm. The length L_N of the notch N is also a dimension in a direction approximately perpendicular to the radial direction of the battery cell 1, and may be less than or equal to the length L_BW of the welding bead BW.

The width B of the welding bead BW is a dimension in the radial direction of the battery cell 1, and may be approximately 0.3 to 1 mm. The width S of the notch N is also a dimension in the radial direction of the battery cell 1, and is smaller than the width B of the welding bead BW.

The welding bead BW may not be limited to a specific size and shape as long as it is able to maintain the bonding strength. With regard to the bonding strength, it is preferable that the tensile force of the bonded portion between the current collector 30 and the battery housing 20 by the welding bead BW is 2 kgf or more, preferably 3 kgf to 15 kgf, and more preferably, 5 kgf to 15 kgf. The tensile force is a force applied perpendicularly to the bonding surface. It may be converted into tensile strength by multiplying the same by the area of the surface on which the force is applied. If the tensile force is 2 kgf or more, preferably 3 kgf or more, when using the battery cell 1, it does not affect the performance of the battery cell 1, and the current collector 30 is not detached from the battery housing 20 due to vibration or pressure generated from the equipment during the process.

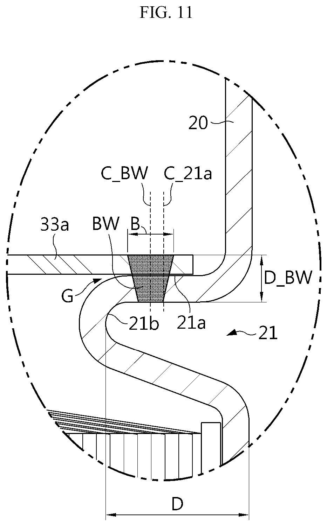

It is desirable to maximize the tensile force within the allowable range by selecting the best welding method. Since the bonding force in terms of tensile force is also related to the area and depth (D_BW in FIG. 11) of the welding bead BW, the bonding force may be adjusted by controlling the area and depth of the welding bead BW. As shown in the cross-section in FIG. 11, the welding bead BW should be formed on the contact surface of the two members to be welded, instead of providing only on the surface, to have a three-dimensional shape with thickness. The depth of the welding bead BW may be adjusted by the output and radiation time of the laser beam. The higher the laser beam output, the deeper the welding bead, and the longer the radiation time, the deeper the welding bead. The output and radiation time of the laser beam may be adjusted so that the welding bead BW is not formed deep enough to be exposed to the outer surface of the beading portion 21 while having an appropriate bonding force. In an actual process, the thickness ranges of the current collector 30 and the battery housing 20 are fixed, so the depth of the laser beam must be adjusted to a level capable of preventing over-welding. In the present disclosure, since at least one notch N is provided in the contact portion 33a of the current collector 30, welding may be performed on a local area of the contact portion 33a, thereby preventing the depth of the laser beam from become great. The small depth of the laser beam may be achieved by using a low-output laser beam, so the manufacturing cost is reduced and the generation of a welding debris spatter is reduced. The small depth of the laser beam may also be achieved by shortening the radiation time, so the manufacturing time is shortened and productivity may be increased.

In one aspect of the present disclosure, the width S of the notch N may be configured within a range of about 10 to 90% of the width L of the laser beam. Here, the width L of the laser beam may indicate the spot diameter. The spot diameter of the laser beam may be 10 µm to 200 µm. When the spot diameter of the laser beam exceeds 200 µm, there is a disadvantage that the influence on corrosion increases and the aspect ratio of the welding bead BW decreases, which may lower the welding efficiency. In addition, when the laser beam size is less than 10 µm, there is a disadvantage that the welding area is small, so that sufficient bonding force is unable to be secured with one welding. Therefore, it is desirable that the laser beam spot diameter satisfies the above range. Preferably, the spot diameter of the laser beam may be about 50 µm.

For example, referring to FIG. 8, the width S of the notch N may be configured to be smaller than the width L of the laser beam. That is, the configuration in which the width S of the notch N is included within the width L of the laser beam may be included in the scope of the present disclosure. If the width S of the notch N becomes larger than the width L of the laser beam, it may no longer function as a notch N. This is due to the fact that the notch N, which functions as a guideline for the laser beam to be radiated for welding, is able to perform such a function only when it is smaller than the width L of the laser beam.

On the other hand, if the width S of the notch N is smaller than about 10% of the width L of the laser beam, the notch N becomes too small, making it difficult to detect the notch N for welding. In another embodiment, if the width S of the notch N is greater than about 90% of the width L of the laser beam, the notch N becomes too large, making it almost the same as the width L of the laser beam, so that the positional deviation of the welding bead BW increases. For example, the center of the laser beam may be positioned within the notch N, but if the width of the notch N is excessively increased, the area where the center of the laser beam may be positioned may be increased. As a result, the positional deviation of the welding bead BW to be welded increases, making it difficult to secure an accurate welding position. Therefore, it is preferable that it falls within a range of about 10 to 90% of the width L of the laser beam.

In another embodiment of the present disclosure, the notch N may be configured to extend in a direction approximately perpendicular to the radial direction of the battery cell 1. For example, referring to FIGS. 6 to 8, the notch N may be configured to extend in a straight line along a direction approximately perpendicular to the radial direction of the battery cell 1. Accordingly, the welding bead BW may form a straight welding pattern having a length L_BW extending approximately along the circumferential direction on the beading portion 21. Alternatively, as another embodiment, the notch N may be configured in the shape of an arc approximately perpendicular to the radial direction of the cylindrical battery cell 1. Accordingly, at least one welding bead BW formed between the beading portion 21 and the contact portion 33a may form an arc-shaped welding pattern extending approximately in the circumferential direction on the beading portion 21. The welding bead BW formed on the contact portion 33a may be configured to extend in the circumferential direction.

If the notch N extends approximately parallel to the radial direction of the battery cell 1, the welding length may be shortened, so that sufficient welding performance may not be secured. In addition, if the notch N extends approximately parallel to the radial direction of the battery cell 1, the number of welding operations required to secure the necessary welding strength increases. As a result, the efficiency of the process may be reduced. On the other hand, according to the structure in which the notch N extends approximately perpendicular to the radial direction of the battery cell 1 of the present disclosure, the efficiency of the process may be improved.

In another embodiment of the present disclosure, a plurality of notches N may be provided in one contact portion 33a. For example, two or more notches may be provided. For example, referring to FIGS. 6 to 8, a plurality of notches N may be provided in one contact portion 33a along a direction approximately perpendicular to the radial direction of the battery cell 1. Preferably, the notches N may be disposed to be spaced a predetermined distance apart from each other along the radial direction of the battery cell 1. For example, referring to FIG. 7, the plurality of notches N may be provided to have a separation pitch P therebetween. Welding applied to the notch N may have a positional deviation between respective welding operations. In this case, if a plurality of notches N are provided, the positional deviation of the welding bead BW finally formed may be minimized compared to a structure in which one notch N is provided.

For example, the plurality of notches N may be configured to be included within the width L of the laser beam. Accordingly, multiple welding points may be formed within one laser beam. To this end, the width S of the notch N must be smaller than the width L of the laser beam. As described above, it is preferable that the width S of the notch N be configured within a range of about 10 to 90% of the width L of the laser beam.

Since the welding area to which welding is applied may have an alignment deviation, it is difficult to perform welding in the same area for every welding, so management is required within a certain level of tolerance. Since the notch N is centrally welded when the laser beam is radiated, if a plurality of notches N are provided, defects may be reduced during welding. For example, even if welding is performed at a position slightly off the notch N due to alignment deviation, errors such as reduced welding force and weak welding are reduced when the plurality of notches N are provided compared to when only one notch N is provided. Therefore, it may be desirable to provide a plurality of notches N.

According to the structure of the present disclosure, the welding defect rate may be significantly reduced. In addition, since the structure in which multiple notches N are provided improves welding strength and prevents errors such as weak welding, it is desirable to provide multiple notches N.

In addition, the width S and the pitch P of the notches N may be determined in consideration of the number of notches N that fall within the width B of the welding bead BW and the width L of the laser beam. For example, when the number of notches N is n, n×S + n-1×P may be smaller than B, and S may be smaller than P. The width S and the pitch P of the notches N may be designed to prevent damage to the current collector 30 and cracks or deformation when forming a fine notch N.

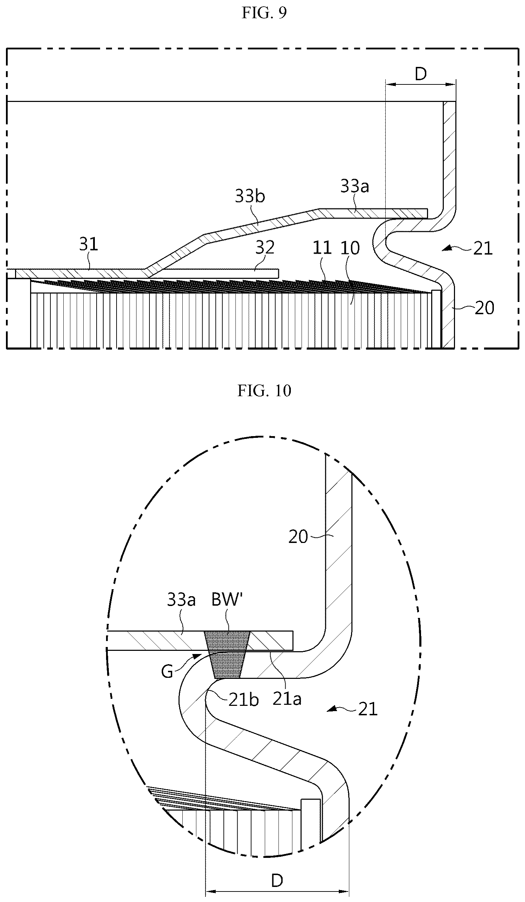

FIG. 9 is a cross-sectional view illustrating a state in which the current collector in FIG. 4 is seated on the beading portion, and FIG. 10 is a drawing illustrating a comparative example of the present disclosure. FIG. 11 is a drawing illustrating a position at which a welding bead provided in a current collector is formed according to an embodiment of the present disclosure.

In an embodiment of the present disclosure, the contact portion 33a may have a flat surface that is coupled to the upper surface of the beading portion 21 facing the opening. Referring to FIGS. 9 to 11, the contact portion 33a may be seated on the flat upper surface of the beading portion 21. In this case, the notch N may be positioned on the flat upper surface of the beading portion 21. In this case, since laser welding is applied to the notch N, the contact portion 33a may be welded to the flat upper surface of the beading portion 21 by a laser beam. More specifically, the contact portion 33a may have a welding bead BW formed by radiation of the laser beam.

For example, referring to FIG. 10 corresponding to a comparative example of the present disclosure, a predetermined gap G may exist between the contact portion 33a of the housing-coupling portion 33 and the beading portion 21. More specifically, since the beading portion 21 is configured by the outer circumference of the battery housing 20 being recessed to a predetermined depth D, the beading portion 21 has a substantially flat section 21a, and a curved area 21b having a predetermined radius of curvature in the area near the innermost point of the beading portion 21. That is, the vertical distance to the contact portion 33a gradually increases from the point where the curved area 21b starts by passing the flat section 21a of the beading portion 21 toward the inside in the radial direction. That is, as shown in FIG. 10, a microscopic space, which gradually widens as it gets closer to the inside in the radial direction, exists between the beading portion 21 of the contact portion 33a and the beading portion 21. In this case, as shown in FIG. 10, when welding is performed on the area where the microscopic gap G is positioned to form a welding bead BW', a welding debris spatter may enter. Welding debris indicates various impurities (dregs) generated during welding, and collectively refers to particles attached to or separated from the surface of the base material due to failure of transition from molten metal to weld metal during welding. As described above, in the past, a welding debris spatter may enter the microscopic space and this may act as a factor causing defects in the post-welding process, as well as in the welding process.

In the present disclosure, since the notch N is provided, the welding bead BW may be formed even if the power of the laser beam required to form the welding bead BW' without the notch is reduced or the size of the laser beam radiation unit is reduced. Therefore, the generation of welding debris may be reduced, and even if welding is performed in the area where the microscopic gap G is positioned, the problem in which a welding debris spatter is introduced may be significantly resolved. Furthermore, in the battery cell 1 according to an embodiment of the present disclosure, as shown in FIG. 11, the notch N may be positioned on the flat upper surface of the beading portion 21. That is, the notch N is positioned within the flat section 21a of the beading portion 21, and accordingly, the contact portion 33a may be welded onto the flat upper surface of the beading portion 21 by a laser beam. Preferably, the width B of the welding bead BW formed between the contact portion 33a and the beading portion 21 may be formed smaller than the flat section 21a of the beading portion 21.

As a result, according to this structure of the present disclosure, since the welding is performed only in an area where there is no gap G between the contact portion 33a and the beading portion 21 by controlling the formation position of the welding bead BW, the inflow of the debris spatter may be reduced during the process.

In another embodiment of the present disclosure, the center of the welding bead BW may be provided further inward than the center of the flat upper surface of the beading portion 21.

For example, referring to FIG. 11, the center C_BW of the welding bead BW may be positioned further inward than the center C_21a of the flat upper surface of the beading portion 21. That is, the welding bead BW may be provided closer to the inside rather than to the outside in the radial direction on the flat section in which no gap G is provided between the contact portion 33a and the beading portion 21.

With this structure, since welding is performed only in the area without a gap between the contact portion 33a and the beading portion 21, the inflow of a debris spatter may be reduced during the process, and at the same time, since the welding area is positioned further inward in the radial direction, the welding strength between the beading portion 21 and the current collector 30 may be relatively improved. That is, according to the above structure, the current collector 30 may be more stably bonded to the beading portion 21.

Since the flat section 21a of the beading portion 21 has a value determined according to the specifications of the battery cell 1, the position of the center C_21a of the flat upper surface of the beading portion 21 is a fixed value in the determined battery cell 1. In order to ensure that the center C_BW of the welding bead BW is positioned further inward than the center C_21a of the flat upper surface of the beading portion 21 and that the welding bead BW is formed in an area without a gap G between the contact portion 33a and the beading portion 21, it is desirable that the width B of the welding bead BW is small. According to the present disclosure, since the notch N is formed on the contact portion 33a of the current collector 30, thereby enabling welding in a local area, the width B of the welding bead BW is able to be configured to be smaller than the width of the conventional welding bead BW'. In another embodiment of the present disclosure, the welding bead BW may be formed between the contact portion 33a and the beading portion 21, and the width B of the welding bead BW may be configured to be smaller than the depth D of the beading portion 21. The width B of the welding bead BW may be, for example, greater than or equal to the width L of the laser beam.

For example, referring to FIG. 11, the width B of the welding bead BW is smaller than the depth D of the beading portion 21. Preferably, the width B of the welding bead BW may be configured to be about 10 to 35% of the depth D of the beading portion 21. More preferably, the width B of the welding bead BW may be configured to be about 15 to 31.67% of the depth D of the beading portion 21. According to the configuration of the present disclosure, sufficient welding strength may be secured while maximizing the efficiency of the welding process.

The depth D_BW of the welding bead BW may be 2 to 4 mm. If the power of the welding laser is excessively high, a back bead may occur on the back of the welding. In the present disclosure, since the power of the laser beam may be reduced through the configuration of the notch N, a back bead occurring when forming a welding bead BW with a small depth D_BW of 2 to 4 mm may be prevented.

Referring back to FIGS. 1 to 3, the housing cover 40 covers the opening formed on one side of the battery housing 20. The housing cover 40 may be fixed by the crimping portion 22 formed on the top of the battery housing 20. In this case, a sealing gasket G1 may be interposed between the battery housing 20 and the housing cover 40 and between the current collector 30 and the housing cover 40 in order to improve the fixing force and the sealing property of the battery housing 20. In this case, the contact portion 33a and/or the second contact portion 33a may be interposed between the beading portion 21 of the battery housing 20 and the sealing gasket G1. As described above, the contact portion 33a and/or the second contact portion 33a interposed between the beading portion 21 and the sealing gasket G1 may be fixed by the bending of the crimping portion 22 extending upward from the beading portion 21.

Referring to FIG. 3, the terminal 50 is electrically connected to the second uncoated portion 12 of the electrode assembly 10 by penetrating the battery housing 20 on the opposite side of the opening of the battery housing 20. The terminal 50 may penetrate approximately the center of the lower surface of the battery housing 20. The terminal 50 may be coupled to the second current collector 60 coupled to the second uncoated portion 12 or may be coupled to a lead tab (not shown) coupled to the second uncoated portion 12 so as to be electrically connected to the electrode assembly 10. Therefore, the terminal 50 may have the same polarity as the second electrode of the electrode assembly 10 and may function as a second electrode terminal T2. If the second uncoated portion 12 is a positive electrode tab, the terminal 50 may function as a positive electrode terminal.

Considering the polarity and function of the terminal 50, the terminal 50 must be insulated from the battery housing 20 having the opposite polarity. To this end, an insulating gasket may be provided between the terminal 50 and the battery housing 20. Alternatively, insulation may be realized by coating a portion of the surface of the terminal 50 with an insulating material.

For the same reason, the second uncoated portion 12 and/or the second current collector 60 must be insulated from the battery housing 20. To this end, an insulator 70 may be interposed between the second uncoated portion 12 and the battery housing 20 and/or between the second current collector 60 and the battery housing 20. When the insulator 70 is applied, the terminal 50 may penetrate the insulator 70 for electrical connection with the second uncoated portion 12.

Meanwhile, in the present disclosure, the outer surface 20a of the closed portion positioned opposite to the opening provided at the top of the battery housing 20 may function as a first electrode terminal T1. If the first uncoated portion 11 is a negative electrode tab, the first electrode terminal T1 may be a negative electrode terminal. The battery cell 1 according to the present disclosure has a structure in which the terminal 50 exposed through the lower surface opposite to the opening of the battery housing 20 may be used as the second electrode terminal T2, and in which the remaining area, excluding the area occupied by the terminal 50 on the lower surface of the battery housing 20 (including the area where the insulating gasket is exposed when the insulating gasket is exposed to the outside of the terminal 50 on the outer surface 20a of the closed portion), may be used as the first electrode terminal T1. Therefore, the battery cell 1 according to the present disclosure may connect both the positive electrode and the negative electrode in one direction when electrically connecting multiple battery cells 1, thereby simplifying the electrical connection structure. In addition, the battery cell 1 according to the present disclosure has a structure in which most of the lower surface opposite to the opening of the battery housing 20 may be used as the electrode terminal, so it is possible to secure a sufficient area for welding components for electrical connection.

Referring back to FIGS. 2 and 3, the second current collector 60 is coupled to the bottom of the electrode assembly 10. The second current collector 60 is made of a conductive metal material and is electrically coupled to the second uncoated portion 12.

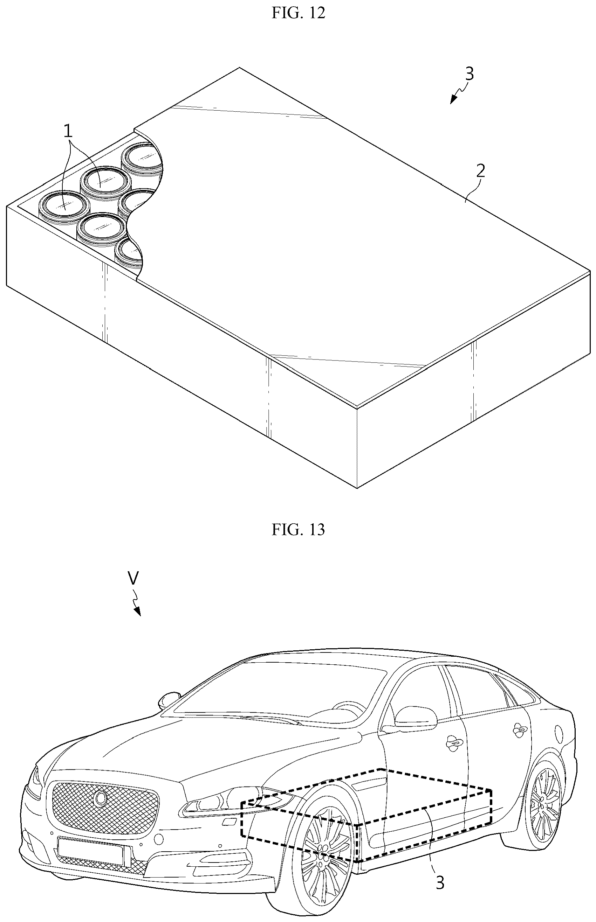

Referring to FIG. 12, a battery pack 3 according to an embodiment of the present disclosure includes a battery assembly in which a plurality of battery cells 1 are electrically connected according to an embodiment of the present disclosure described above, and a pack housing 2 that accommodates the battery assembly. In the drawing of the present disclosure, components such as a bus-bar, a cooling unit, and a power terminal for electrical connection are omitted for convenience of drawing. The plurality of battery cells 1 are arranged in a predetermined number of rows, and the terminal 50 exposed through the lower surface of each battery cell 1 is used as the second electrode terminal T2, and the remaining area of the lower surface of the battery housing 20 is used as the first electrode terminal T1. Therefore, when electrically connecting the plurality of battery cells 1, both the positive electrode and the negative electrode may be connected in one direction, thereby simplifying the electrical connection structure. Through this, the number of battery cells 1 to be stored in the same space may be increased, thereby improving energy density and facilitating electrical wiring work. Therefore, since space efficiency is good and electrical wiring efficiency is high, there is a significant improvement in workability during the assembly process of the electric vehicle, and assembly and maintenance of the battery pack 3.

Referring to FIG. 13, a vehicle 5 according to an embodiment of the present disclosure may be, for example, an electric vehicle, a hybrid vehicle, or a plug-in hybrid vehicle, and includes a battery pack 3 according to an embodiment of the present disclosure. The vehicle 5 includes a four-wheel vehicle and a two-wheel vehicle. The vehicle 5 operates by power supplied from the battery pack 3 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

### [Description of Reference numerals]

5: Vehicle
3: Battery pack
2: Pack housing
1: Battery cell
10: Electrode assembly
11: First uncoated portion
12: Second uncoated portion
H1: Winding hole
20: Battery housing
20a: Outer surface of closed portion
T1: First electrode terminal
21: Beading portion
22: Crimping portion
30: Current collector (first current collector)
H2: Current collector hole
31: Support portion
32: Tab-coupling portion
H3: Injection hole
33: Housing-coupling portion
33a: Contact portion
33b: Coupling portion
N: Notch
BW: Welding bead
40: Housing cover
41: Venting portion
G1: Sealing gasket
50: Terminal
T2: Second electrode terminal
60: Second current collector
70: Insulator

## Claims

1. A battery cell comprising:
an electrode assembly configured by winding a first electrode and a second electrode with a separator interposed therebetween around a winding axis to define a core and an outer surface, the first electrode comprising an active material portion coated with an active material layer in a winding direction and a first uncoated portion not coated with an active material layer, and at least a portion of the first uncoated portion being used as an electrode tab itself;
a battery housing configured to receive the electrode assembly through an opening formed on one side; and
a current collector comprising a tab-coupling portion coupled to the first uncoated portion and a housing-coupling portion extending from the tab-coupling portion and electrically coupled to an inner surface of the battery housing, wherein at least one notch is provided in the housing-coupling portion.

2. The battery cell according to claim 1,
wherein the battery housing has a beading portion formed to be recessed inward at an end adjacent to the opening.

3. The battery cell according to claim 2,
wherein the housing-coupling portion comprises:
a contact portion coupled onto the beading portion of the battery housing; and
a coupling portion connecting the tab-coupling portion and the contact portion.

4. The battery cell according to claim 3,
wherein the notch is provided on the contact portion.

5. The battery cell according to claim 3,
wherein the notch is configured to be irradiated with a laser beam

6. The battery cell according to claim 5,
wherein a width of the notch is 10 to 90% of a width of the laser beam.

7. The battery cell according to claim 1,
wherein the notch extends in a direction perpendicular to a radial direction of the battery cell.

8. The battery cell according to claim 3,
wherein a plurality of notches are provided in one contact portion.

9. The battery cell according to claim 1,
wherein the notches are disposed to be spaced a predetermined distance apart from each other in a radial direction of the battery cell.

10. The battery cell according to claim 5,
wherein a plurality of notches are configured to be included within a width of the laser beam.

11. The battery cell according to claim 2,
wherein the notch is positioned on a flat upper surface of the beading portion.

12. The battery cell according to claim 5,
wherein the contact portion has a welding bead formed by radiation of a laser beam.

13. The battery cell according to claim 1,
wherein the notch is formed by notching a predetermined portion of the housing-coupling portion to partially reduce the thickness of the housing-coupling portion.

14. The battery cell according to claim 12,
wherein the notch is positioned on a flat upper surface of the beading portion, and
wherein a center of the welding bead is positioned inward from a center of the flat upper surface of the beading portion.

15. A current collector comprising a tab-coupling portion coupled to an uncoated portion of an electrode assembly of a battery cell and a housing-coupling portion extending from the tab-coupling portion and electrically coupled to an inner surface of a battery housing of the battery cell,
wherein at least one notch is provided in the housing-coupling portion,
wherein the notch is configured to be irradiated with a laser beam, and
wherein a width of the notch is 10 to 90% of a width of the laser beam.

16. A battery pack comprising at least one battery cell according to any one of claims 1 to 14.

17. A vehicle comprising at least one battery pack according to claim 16.
